# EUROPEAN PATENT APPLICATION

(11) **EP 4 814 340 A1**
(43) Date of publication of application: **30.09.2026**
(21) Application number: 25182416.5
(22) Date of filing: 12.06.2025
(51) Int. Cl.: F16H 25/22, F16C 29/06, F16H 25/20

(54) **ROTARY BALL SCREW SPLINE ASSEMBLY**

(30) Priority: 28.03.2025 CN 202510381071
(71) Applicant: TBI Motion Technology Co., Ltd., New Taipei City 238 (TW)
(72) Inventor: Ko, Chun-Chan, 238 New Taipei City (TW)
(74) Representative: Schwarz & Partner Patentanwälte GmbH

(57) **Abstract**

A rotary ball screw spline assembly (100) includes a shaft (10), a ball nut (20) and a ball spline (30). The ball nut (20) and the ball spline (30) are arranged on the shaft (10). The ball nut (20) has a plurality of first balls (21) rolling on a thread rolling groove (11). A first distance (d1) is provided between the center of each first ball (21) and an axis (C) of the shaft (10). The ball spline (30) includes a spline outer cylinder (31) and a plurality of second balls (32) arranged on the spline outer cylinder (31) and rolling on a linear rolling groove (12). A second distance (d2) is provided between the center of each second ball (32) and the axis (C) of the shaft (10), and the second distance (d2) is greater than the first distance (d1). When the spline outer diameter (Ds) of the ball spline (30) meets a specific formula, the optimal spline outer diameter (Ds) of the ball spline (30) can be obtained to effectively reduce the volume of the ball spline (30).

## Description

### BACKGROUND

### Technical Field

The present invention relates to a rotary ball screw spline assembly, and in particular, to a rotary ball screw spline assembly capable of operating with low inertia.

### Related Art

Nowadays, rotary ball screw spline assemblies are widely used in high-precision transmission systems, such as robots, CNC machines, and automation equipment. The overall dimensions of ball nuts and ball splines are usually adjusted according to empirical rules in a traditional design method. However, this may lead to uneven load or increased friction loss, which in turn affects product life and accuracy.

### SUMMARY

In view of this, an optimization method that can be based on mathematical calculation is required to ensure the optimal kinematic performance of the rotary ball screw spline assembly, and to further reduce the volume and weight of the ball nut or ball spline, so as to reduce the inertia generated by the rotary ball screw spline assembly during operation.

In an embodiment, the present invention provides a rotary ball screw spline assembly, which includes a shaft, a ball nut, and a ball spline. A surface of the shaft is provided with a spiral thread rolling groove and a straight linear rolling groove. The ball nut is arranged on the shaft and has a plurality of first balls rolling on the thread rolling groove, and a first distance is provided between a center of each first ball located in the thread rolling groove and an axis of the shaft. The ball spline is arranged on the shaft, and the ball spline includes a spline outer cylinder and a plurality of second balls. The plurality of second balls are arranged on the spline outer cylinder and roll on the linear rolling groove, and a second distance is provided between a center of each second ball located in the linear rolling groove and the axis of the shaft. The second distance is greater than the first distance.

A spline outer diameter of the spline outer cylinder is calculated by the following formula: $Ds = 2 \left(\frac{hs}{2 cos \left(a+b\right)}+\frac{∅ \times Fs}{2}+X\right)$
Ds is the spline outer diameter;
hs is twice a distance between the center of the second ball and an axis of the spline outer cylinder when the second ball rolling on the linear rolling groove is assembled on the spline outer cylinder;
a is an included angle between a first extension line and a second extension line, the first extension line is an imaginary straight line from a contact point between the second ball and the linear rolling groove to the center of the second ball, and the second extension line is an imaginary straight line with the shortest distance between the center of the second ball and the axis;
b is a machining error angle of the linear rolling groove;
Ø is a diameter of the second ball;
Fs is a ball diameter machining error percentage; and
X is a necessary wall thickness of the spline outer cylinder.

The above-mentioned hs shall meet the following rules: $hs > D + 2 \times \left(cos\left(a+b\right)\times \frac{∅}{2}\right)$
D is a diameter of the shaft.

The spline outer diameter of the spline outer cylinder, derived by the above-mentioned formula, is the optimal spline outer diameter dimension that can be obtained corresponding to the diameter of the shaft and a required load that can be borne by limiting the three-wire height (hs) of the spline to be greater than that of the ball nut. Hereby, it is possible to ensure that the ball performs load transfer at an appropriate position, with appropriate load distribution and kinematic accuracy, and local stress concentration can be reduced. Meanwhile, compared with a previous spline outer diameter, the obtained optimal spline outer diameter can effectively reduce the volume of the ball spline, thus achieving low-inertia operation of the whole rotary ball screw spline assembly in the operating process, and due to the low inertia characteristic of the rotary ball screw spline assembly, the impact caused by the inertia effect during operation can be improved.

In some embodiments, the above-mentioned a is less than 45°.

In some embodiments, a diameter of the first ball is the same as that of the second ball.

In some embodiments, a nut outer diameter of the ball nut is equal to the spline outer diameter.

In some embodiments, an angle of the above-mentioned b is about 10° to 15°.

In some embodiments, a value of the above-mentioned X is greater than 0.3 millimeter.

In some embodiments, a value of the above-mentioned Fs is 5%.

In some embodiments, the ball spline of the rotary ball screw spline assembly further includes a bearing jacket arranged on an outer surface of the spline outer cylinder in a sheathing manner, and the second balls are arranged between the bearing jacket and the spline outer cylinder. A jacket outer diameter of the bearing jacket is calculated by the following formula: $Rs = 2 \left(\frac{hs}{2 cos \left(a+b\right)}+\frac{3 ∅}{2}\times Fs+2X\right)$
Rs is the jacket outer diameter.

In some embodiments, a spline inner diameter of the ball spline is calculated by the following formula: $ds = 2 \left(\sqrt{{\left(\frac{hs}{2}-sin\left(\frac{∅ \times 180}{2 \times π}\right)\right)}^{2} + {\left(\frac{∅}{2}\times cos\left(\frac{∅ \times 180}{2 \times π}\right)\right)}^{2}}\right)$
ds is the spline inner diameter.

In another embodiment, the present invention provides a rotary ball screw spline assembly, which includes a shaft, a ball nut, and a ball spline. A surface of the shaft is provided with a spiral thread rolling groove and a straight linear rolling groove. The ball nut is arranged on the shaft and has a plurality of first balls rolling on the thread rolling groove, and a first distance is provided between a center of each first ball located in the thread rolling groove and an axis of the shaft. The ball spline is arranged on the shaft, and the ball spline includes a spline outer cylinder and a plurality of second balls. The plurality of second balls are arranged on the spline outer cylinder and roll on the linear rolling groove, and a second distance is provided between a center of each second ball located in the linear rolling groove and the axis of the shaft. The second distance is greater than the first distance.

A spline inner diameter of the spline outer cylinder is calculated by the following formula: $ds = 2 \left(\sqrt{{\left(\frac{hs}{2}-sin\left(\frac{∅ \times 180}{2 \times π}\right)\right)}^{2} + {\left(\frac{∅}{2}\times cos\left(\frac{∅ \times 180}{2 \times π}\right)\right)}^{2}}\right)$
ds is the spline inner diameter;
hs is twice a distance between the center of the second ball and an axis of the spline outer cylinder when the second ball rolling on the linear rolling groove is assembled on the spline outer cylinder; and
Ø is a diameter of the second ball.
hs shall meet the following rules: $hs > D + 2 \times \left(cos\left(a+b\right)\times \frac{∅}{2}\right)$
D is a diameter of the shaft;
a is an included angle between a first extension line and a second extension line, the first extension line is an imaginary straight line from a contact point between the second ball and the linear rolling groove to the center of the second ball, and the second extension line is an imaginary straight line with the shortest distance between the center of the second ball and the axis; and
b is a machining error angle of the linear rolling groove.

The spline inner diameter of the spline outer cylinder, derived by the above-mentioned formula, is the optimal spline outer diameter dimension that can be obtained corresponding to the diameter of the shaft and a required load that can be borne by limiting the three-wire height (hs) of the spline to be greater than that of the ball nut. Hereby, it is possible to ensure that the ball performs load transfer at an appropriate position, with appropriate load distribution and kinematic accuracy, and local stress concentration can be reduced. Meanwhile, compared with a previous spline inner diameter, the obtained optimal spline inner diameter can effectively reduce the weight of the ball spline, thus achieving low-inertia operation of the whole rotary ball screw spline assembly in the operating process, and due to the low inertia characteristic of the rotary ball screw spline assembly, the impact caused by the inertia effect during operation can be improved.

In some embodiments, the above-mentioned a is less than 45°.

In some embodiments, a diameter of the first ball is the same as that of the second ball.

In some embodiments, an angle of the above-mentioned b is about 10° to 15°.

### BRIEF DESCRIPTION OF THE DRAWINGS

FIG. 1 is a three-dimensional view of a rotary ball screw spline assembly according to an embodiment of the present invention.
FIG. 2 is a sectional view of a rotary ball screw spline assembly according to an embodiment of the present invention.
FIG. 3 is a sectional view of a shaft and a second ball according to an embodiment of the present invention.
FIG. 4 is a sectional view of a spline outer cylinder of a ball spline according to an embodiment of the present invention.

### DETAILED DESCRIPTION

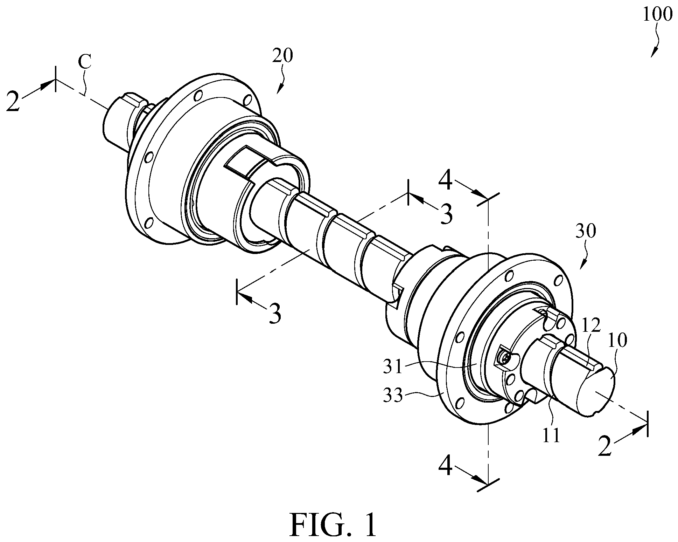

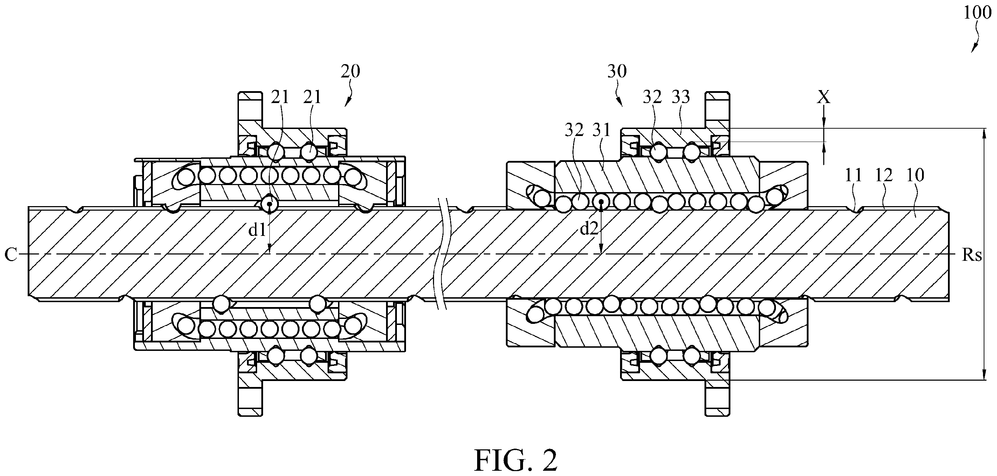

Referring to FIG. 1 and FIG. 2, FIG. 1 is a three-dimensional view of a rotary ball screw spline assembly according to an embodiment of the present invention, and FIG. 2 is a sectional view of a rotary ball screw spline assembly according to an embodiment of the present invention. A rotary ball screw spline assembly 100 in this embodiment includes a shaft 10, a ball nut 20, and a ball spline 30. A surface of the shaft 10 is provided with a spiral thread rolling groove 11 and a straight linear rolling groove 12. The ball nut 20 is arranged on the shaft 10 and has a plurality of first balls 21 rolling on the thread rolling groove 11. A first distance d1 is provided between a center of each first ball 21 located in the thread rolling groove 11 and an axis C of the shaft 10.

The ball spline 30 is arranged on the shaft 10, and the ball spline 30 includes a spline outer cylinder 31 and a plurality of second balls 32. The plurality of second balls 32 are arranged on the spline outer cylinder 31 and roll on the linear rolling groove 12. A second distance d2 is provided between a center of each second ball 32 located in the linear rolling groove 12 and the axis C of the shaft 10. The second distance d2 is greater than the first distance d1. Here, the first distance d1 can be regarded as half of the three-wire height of the ball nut 20, while the second distance d2 can be regarded as half of the three-wire height of the ball spline 30. By making the second distance d2 greater than the first distance d1, the three-wire height of the ball spline 30 is higher than that of the ball nut 20, and then a contact angle and position between the ball spline 30 and the shaft 10 are adjusted, thus ensuring that the second ball 32 performs load transfer at an appropriate position, with appropriate load distribution and kinematic accuracy, and local stress concentration can be reduced.

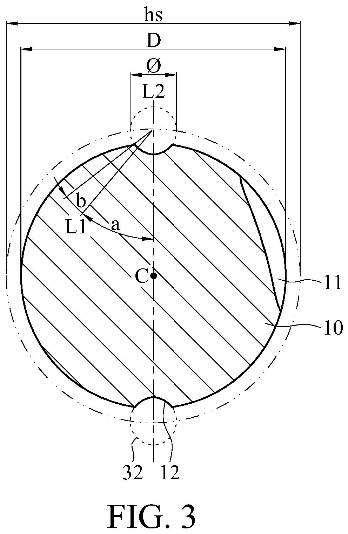

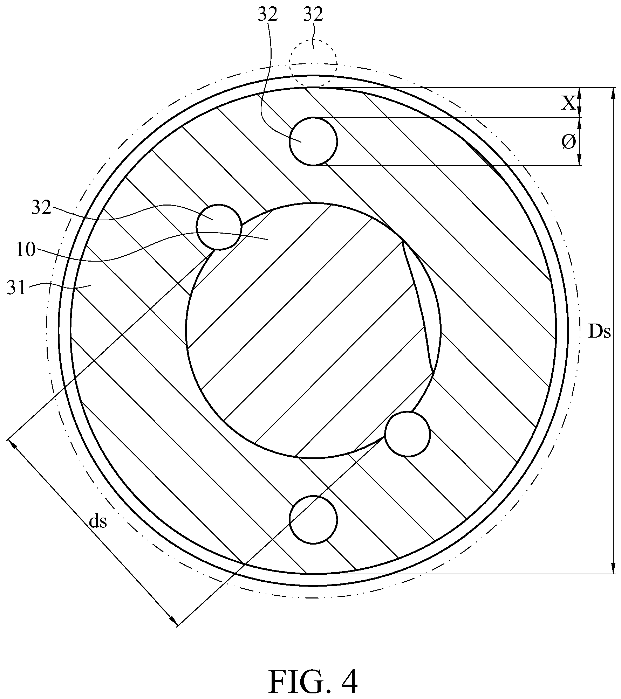

Next, referring to both FIG. 3 and FIG. 4, FIG. 3 is a sectional view of a shaft and a second ball according to an embodiment of the present invention, and FIG. 4 is a sectional view of a spline outer cylinder of a ball spline according to an embodiment of the present invention. In this embodiment, calculation of the spline outer diameter Ds of the spline outer cylinder 31 will be illustrated with reference to FIG. 1 to FIG. 4. The spline outer diameter Ds of the spline outer cylinder 31 is calculated by the following formula: $Ds = 2 \left(\frac{hs}{2 cos \left(a+b\right)}+\frac{∅ \times Fs}{2}+X\right)$
Ds is the spline outer diameter;
hs is twice a distance between the center of the second ball 32 and an axis of the spline outer cylinder 31 when the second ball 32 rolling on the linear rolling groove 12 is assembled on the spline outer cylinder 31;
a is an included angle between a first extension line L1 and a second extension line L2, the first extension line L1 is an imaginary straight line from a contact point between the second ball 32 and the linear rolling groove 12 to the center of the second ball 32, and the second extension line L2 is an imaginary straight line with the shortest distance between the center of the second ball 32 and the axis C;
b is a machining error angle of the linear rolling groove 12;
Ø is a diameter of the second ball 32;
Fs is a ball diameter machining error percentage; and
X is a necessary wall thickness of the spline outer cylinder 31.

As can be seen from FIG. 4, the outermost diameter of the spline outer cylinder 31 is the spline outer diameter Ds. FIG. 3 shows a sectional view of the shaft 10, and the second ball 32 located in the linear rolling groove 12 is indicated by a dotted line. A diameter of a circle indicated by a two-dot chain line in FIG. 3 is a value of hs. The circle indicated by the two-dot chain line is a position where the center of the second ball 32 assembled on the spline outer cylinder 31 that will roll on the linear rolling groove 12 is located. Since the linear rolling grooves 12 are arranged in parallel on upper and lower symmetrical sides of the shaft 10, the circle indicated by the two-dot chain line will also pass through each of the centers of the second balls 32 rolling on upper and lower linear rolling grooves 12. hs refers to the diameter of the circle indicated by the two-dot chain line, and can be regarded as the three-wire height of the ball spline 30, that is, hs is approximately twice the second distance d2, that is, hs is twice the distance between the center of the second ball 32 and the axis C of the spline outer cylinder 31.

As can be further seen from FIG. 3, a refers to the angle (in °) and is an included angle between the first extension line L1 and the second extension line L2. The first extension line L1 is an imaginary straight line from a contact point between the second ball 32 and the linear rolling groove 12 to the center of the second ball 32. The second extension line L2 is an imaginary straight line with the shortest distance between the center of the second ball 32 and the axis C.

In this embodiment, an arc surface of the linear rolling groove 12 is different from that of the second ball 32 in shape, and the second ball 32 will be in contact with the arc surface of the linear rolling groove 12 with two points on the circle, and the number of the contact points in this case is 2. Only an imaginary straight line, i.e., the first extension line L1, from a contact point on the left side between the second ball 32 and the linear rolling groove 12 to the center of the second ball 32 is shown in FIG. 3. In fact, the second ball 32 and the linear rolling groove 12 also have a contact point on the right side, and an included angle between the imaginary straight line from this contact point to the center of the second ball 32 and the second extension line L2 will be the same as the included angle a between the first extension line L1 and the second extension line L2. In addition, it should be noted that due to the scale of the drawing, it may be misunderstood visually in FIG. 3 that the entire arc surface of the second ball 32 is in contact with the linear rolling groove 12, but in fact there are only two contact points.

In addition, to meet the aforementioned condition that the second distance d2 is greater than the first distance d1, and to make the contact point of the ball spline 30 higher than that of the ball nut 20, and to make the calculation convenient, when the angle corresponding to a on the ball nut 20 is set to 45°, the angle of a of the ball spline 30 may be often less than 45°. As for the magnitude of the angle to be adopted, it will be mostly determined by table lookup according to the diameter D of the shaft 10, a load required by the rotary ball screw spline assembly 100, and the like.

b is the machining error angle (in °) of the linear rolling groove, which means that an error is generated in the included angle a between the first extension line L1 and the second extension line L2 due to a possible machining error when the linear rolling groove 12 is machined. When the spline outer diameter Ds is calculated, the machining error angle b of the linear rolling groove needs to be incorporated into the calculation. In addition, during machining, depending on the machining method, machining accuracy, and the like, the error may be generated on both the left and right sides, and the machining error angle b of the linear rolling groove defined here, as shown in FIG. 3, refers to an error angle of one side (left side in the drawing). In this embodiment, a value of the machining error angle b of the linear rolling groove is preferably within the range of 10° to 15°.

The machining error may also be generated in the manufacture of the second ball 32. To enable the spline outer diameter Ds to be reduced more accurately and effectively while meeting the requirements of just installing the second ball 32 and rolling smoothly, a ball diameter machining error percentage Fs of the second ball 32 is taken into account when the spline outer diameter Ds is calculated. In this embodiment, the ball diameter machining error percentage Fs is 5%. In other embodiments, the ball diameter machining error percentage Fs can also be adjusted depending on the machining accuracy, so that the calculated spline outer diameter Ds is more in line with the actual requirements.

When the spline outer cylinder 31 is manufactured, to meet the required structural strength, and considering the machining tolerance, it is necessary to form certain necessary wall thickness X outward in a ball channel where the second ball 32 is arranged, thereby avoiding that the structural strength is affected. The above-mentioned necessary wall thickness X is the minimum wall thickness required based on the consideration of the current achievable machining tolerance. In this embodiment, a value of the necessary wall thickness X is greater than 0.3 millimeter.

To make the derived spline outer diameter Ds as small as possible, and the dimension of the spline outer cylinder 31 as small as possible, a volume of the whole ball spline 30 is reduced, and then the inertia during operation can be reduced. hs shall meet the following rules: $hs > D + 2 \times \left(cos\left(a+b\right)\times \frac{∅}{2}\right)$
D is a diameter of the shaft 10.

The spline outer diameter Ds of the spline outer cylinder 31, derived by the above-mentioned formula, is the optimal spline outer diameter Ds that can be obtained corresponding to the diameter D of the shaft 10 and a required load that can be borne by the rotary ball screw spline assembly 100 by limiting the second distance d2 of the ball spline 30 to be greater than the first distance d1, that is, allowing the three-wire height of the ball spline 30 to be greater than that of the ball nut 20. Hereby, compared with a previous spline outer diameter, the ball spline 30 manufactured under the optimal spline outer diameter Ds can effectively reduce the volume of the ball spline 30, thus achieving low-inertia operation of the whole rotary ball screw spline assembly 100 in the operating process, and due to the low inertia characteristic of the rotary ball screw spline assembly, the impact caused by the inertia effect during operation can be improved.

To verify the above-mentioned effect, inertia analysis is conducted in a simulated manner on the spline outer cylinder 31 of Example 1 and a current spline outer cylinder as a comparative example under the same operating conditions. Related analysis data results are as shown in Table 1.

**Table 1**

| | Example 1 | Comparative example |
|---|---|---|
| Spline outer diameter Ds (cm) | 3.25 | 3.6 |
| Weight of ball spline 30 (kg) | 0.251 | 0.37 |
| Inertia of rotary ball screw spline assembly 100 (kg × cm²) | 0.7163 | 1.086 |

As can be seen from the above table, given identical settings for the dimensions of the second ball 32, the diameter D of the shaft 10, the required load that can be borne by the rotary ball screw spline assembly 100, and the like, corresponding condition values are substituted into the aforementioned formula for calculation to derive the value of the spline outer diameter Ds that meets the conditions of hs, and thereby, it can be derived that the spline outer diameter Ds is 3.25 cm. The spline outer diameter Ds is significantly less than the current (i.e., the comparative example) 3.6 cm. In a case where the spline outer diameter Ds is effectively reduced to reduce the overall volume, the weight of the ball spline 30 may be also reduced correspondingly. Under the dual effect of reducing volume and weight, the inertia of the rotary ball screw spline assembly 100 during operation may be effectively reduced. Compared with the rotary ball screw spline assembly in the comparative example, the rotary ball screw spline assembly 100 in Example 1 can improve the impact caused by the inertia effect during operation due to its low inertia characteristic.

Further, when the above-mentioned conditions are met, to ensure the kinematic consistency of all the balls in the rotary ball screw spline assembly 100 and avoid additional friction and stress generated by balls with different diameters, the diameter of the first ball 21 and the diameter of the second ball 32 can be made the same.

In addition, after the spline outer diameter Ds is determined according to the above-mentioned formula and conditions, the nut outer diameter of the ball nut 20 can be made equal to the spline outer diameter Ds. In this way, the whole rotary ball screw spline assembly 100 may be more convenient in use planning after installation, without designing or manufacturing corresponding members assembled to the ball nut and the ball spline due to the nut outer diameter of the ball nut 20 and the spline outer diameter Ds of the ball spline 30 respectively.

As can be seen from FIG. 1 and FIG. 2, in this embodiment, the ball spline 30 further includes a bearing jacket 33 arranged on an outer surface of the spline outer cylinder 31 in a sheathing manner, and a plurality of second balls 32 are arranged between the bearing jacket 33 and the spline outer cylinder 31. Since the bearing jacket 33 is assembled on the spline outer cylinder 31, and the bearing jacket and the spline outer cylinder are assembled with each other through the plurality of second balls 32, the bearing jacket 33 also has the most suitable corresponding jacket outer diameter Rs, and the jacket outer diameter Rs of the bearing jacket 33 is calculated by the following formula: $Rs = 2 \left(\frac{hs}{2 cos \left(a+b\right)}+\frac{3 ∅}{2}\times Fs+2X\right)$
Rs is the jacket outer diameter.

As can be seen from FIG. 2, the jacket outer diameter Rs refers to a diameter of the bearing jacket 33. The bearing jacket 33 is arranged on the spline outer cylinder 31 in a sheathing manner, and the second balls 32 are sandwiched therebetween. Therefore, the jacket outer diameter Rs is the spline outer diameter Ds plus the diameter Ø of the second ball 32 outwards, and the ball diameter machining error percentage Fs of the second ball 32 is also considered.In addition, referring to the spline outer cylinder 31 plus the same necessary wall thickness X outwards again, the calculation formula for the above-mentioned jacket outer diameter Rs can be derived. Since the jacket outer diameter Rs is derived from the spline outer diameter Ds of the spline outer cylinder 31, the volume can also be effectively reduced by the jacket outer diameter Rs, and materials required for manufacturing the bearing jacket 33 can be saved, thus effectively reducing the manufacturing costs.

In addition to above-mentioned effectively reducing the volume of the spline outer cylinder 31 by calculating the spline outer diameter Ds, thus reducing the inertia of the rotary ball screw spline assembly 100, the spline inner diameter ds of the ball spline 30 can be further derived by calculation by the following formula: $ds = 2 \left(\sqrt{{\left(\frac{hs}{2}-sin\left(\frac{∅ \times 180}{2 \times π}\right)\right)}^{2} + {\left(\frac{∅}{2}\times cos\left(\frac{∅ \times 180}{2 \times π}\right)\right)}^{2}}\right)$
ds is the spline inner diameter.

The spline inner diameter ds is an inner circle diameter of the ball spline 30. The spline inner diameter ds calculated by the above-mentioned formula is the optimal spline inner diameter ds that can be derived from the spline outer diameter Ds. By calculating the optimal spline inner diameter ds, the overall weight of the ball spline 30 can be further reduced, thereby reducing the inertia of the rotary ball screw spline assembly 100.

Similarly, to verify the above-mentioned effect of changing both the spline outer diameter Ds and the spline inner diameter ds, inertia analysis is conducted in a simulated manner on the spline outer cylinder 31 of Example 2 and a current spline outer cylinder as a comparative example under the same operating conditions. Related analysis data results are as shown in Table 2.

**Table 2**

| | Example 2 | Comparative example |
|---|---|---|
| Spline outer diameter Ds (cm) | 3.25 | 3.6 |
| Spline inner diameter ds (cm) | 1.7 | 1.61 |
| Weight of ball spline (kg) | 0.247 | 0.37 |
| Inertia of rotary ball screw spline assembly 100 (kg × cm²) | 0.686 | 1.086 |

As can be seen from the above table, given identical settings for the dimensions of the second ball 32, the diameter D of the shaft 10, the required load that can be borne by the rotary ball screw spline assembly 100, and the like, corresponding condition values are substituted into the aforementioned formula for calculation to derive the values of the spline outer diameter Ds and the spline inner diameter ds that meet the conditions of hs, and thereby, it can be derived that the spline outer diameter Ds is 3.25 cm, and the spline inner diameter ds is 1.7 cm. Except that the spline outer diameter Ds is significantly less than the current (i.e. the comparative example) 3.6 cm, the spline inner diameter ds is greater than the current (i.e. the comparative example) 1.61 cm. In a case where the spline outer diameter Ds and the spline inner diameter ds are both changed, the overall volume is further reduced, so that the weight of the ball spline 30 is reduced correspondingly. Under the dual effect of reducing volume and weight, the inertia of the rotary ball screw spline assembly 100 during operation is more effectively reduced. Compared with the rotary ball screw spline assembly in the comparative example, the rotary ball screw spline assembly 100 in Example 2 can improve the impact caused by the inertia effect during operation due to its low inertia characteristic.

As can be seen from the foregoing description, the reduction of the volume and weight of the ball spline 30 can reduce the inertia of the rotary ball screw spline assembly 100 during operation. In the aforementioned Example 1, the spline outer diameter Ds is changed, while in Example 2, both the spline outer diameter Ds and the spline inner diameter ds are changed. However, in another embodiment, the volume and weight of the ball spline 30 can be reduced only by changing the spline inner diameter ds, thus achieving the effect of reducing the inertia of the rotary ball screw spline assembly 100 during operation.

Under the structure of the aforementioned rotary ball screw spline assembly 100, in Example 3, given the identical setting that the second distance d2 is greater than the first distance d1, and a is set to be less than 45°, the diameter of the first ball 21 is the same as the diameter Ø of the second ball 32, and the angle of b is about 10° to 15°. Then the spline inner diameter ds is calculated by the following formula: $ds = 2 \left(\sqrt{{\left(\frac{hs}{2}-sin\left(\frac{∅ \times 180}{2 \times π}\right)\right)}^{2} + {\left(\frac{∅}{2}\times cos\left(\frac{∅ \times 180}{2 \times π}\right)\right)}^{2}}\right)$
ds is the spline inner diameter.

It should be noted that when calculating the spline inner diameter ds, hs also needs to meet the following rules: $hs > D + 2 \times \left(cos\left(a+b\right)\times \frac{∅}{2}\right)$
D is the diameter of the shaft 10;
a is an included angle between a first extension line L1 and a second extension line L2, the first extension line L1 is an imaginary straight line from a contact point between the second ball 32 and the linear rolling groove 12 to the center of the second ball 32, and the second extension line L2 is an imaginary straight line with the shortest distance between the center of the second ball 32 and the axis C; and
b is a machining error angle of the linear rolling groove.

To verify the above-mentioned effect, inertia analysis is conducted in a simulated manner on the spline outer cylinder 31 of Example 3 and a current spline outer cylinder as a comparative example under the same operating conditions. Related analysis data results are as shown in Table 3.

**Table 3**

| | Example 3 | Comparative example |
|---|---|---|
| Spline inner diameter ds (cm) | 1.7 | 1.61 |
| Weight of ball spline 30 (kg) | 0.356 | 0.37 |
| Inertia of rotary ball screw spline assembly 100 (kg × cm²) | 1.0372 | 1.086 |

As can be seen from the above table, given identical settings for the dimensions of the second ball 32, the diameter D of the shaft 10, the required load that can be borne by the rotary ball screw spline assembly 100, the spline outer diameter Ds, and the like, corresponding condition values are substituted into the aforementioned formula for calculation to derive the value of the spline inner diameter ds that meets the conditions of hs, and thereby, it can be derived that the spline inner diameter ds is 1.7 cm. The spline inner diameter ds is slightly greater than the current (i.e., the comparative example) 1.61 cm. When the spline inner diameter ds is slightly large, the total wall thickness of the ball spline 30 can also be slightly reduced, and the weight of the ball spline 30 may be correspondingly reduced. Under the effect of weight reduction, the inertia of the rotary ball screw spline assembly 100 during operation can also be effectively reduced. Compared with the rotary ball screw spline assembly in the comparative example, the rotary ball screw spline assembly 100 in Example 3 can improve the impact caused by the inertia effect during operation due to its low inertia characteristic.

## Claims

1. A rotary ball screw spline assembly (100), comprising:
a shaft (10), wherein a surface of the shaft (10) is provided with a spiral thread rolling groove (11) and a straight linear rolling groove (12);
a ball nut (20), arranged on the shaft (10) and having a plurality of first balls (21) rolling on the thread rolling groove (11), wherein a first distance (d1) is provided between a center of each first ball (21) located in the thread rolling groove (11) and an axis (C) of the shaft (10); and
a ball spline (30), arranged on the shaft (10), wherein the ball spline (20) comprises a spline outer cylinder (31) and a plurality of second balls (32), the second balls (32) are arranged on the spline outer cylinder (31) and roll on the linear rolling groove (12), a second distance (d2) is provided between a center of each second ball (32) located in the linear rolling groove (12) and the axis (C) of the shaft (10), the second distance (d2) is greater than the first distance (d1), and a spline outer diameter (Ds) of the spline outer cylinder (31) is calculated by the following formula: $Ds = 2 \left(\frac{hs}{2 cos \left(a+b\right)}+\frac{∅ \times Fs}{2}+X\right)$
Ds is the spline outer diameter;
hs is twice a distance between the center of the second ball (32) and an axis of the spline outer cylinder (31) when the second ball (32) rolling on the linear rolling groove (12) is assembled on the spline outer cylinder (31);
a is an included angle between a first extension line (L1) and a second extension line (L2), the first extension line (L2) is an imaginary straight line from a contact point between the second ball (32) and the linear rolling groove (12) to the center of the second ball (32), and the second extension line (L2) is an imaginary straight line with the shortest distance between the center of the second ball (32) and the axis (C);
b is a machining error angle of the linear rolling groove (12);
Ø is a diameter of the second ball (32);
Fs is a ball diameter machining error percentage; and
X is a necessary wall thickness of the spline outer cylinder (31);
wherein hs meets the following rules: $hs > D + 2 \times \left(cos\left(a+b\right)\times \frac{∅}{2}\right)$
D is a diameter of the shaft (10).

2. The rotary ball screw spline assembly according to claim 1, wherein a is less than 45°.

3. The rotary ball screw spline assembly according to claim 1, wherein a diameter of the first ball (21) is the same as that of the second ball (32).

4. The rotary ball screw spline assembly according to claim 1, wherein a nut outer diameter of the ball nut (20) is equal to the spline outer diameter (Ds).

5. The rotary ball screw spline assembly according to claim 1, wherein an angle of b is about 10° to 15°.

6. The rotary ball screw spline assembly according to claim 1, wherein a value of X is greater than 0.3 millimeter.

7. The rotary ball screw spline assembly according to claim 1, wherein a value of Fs is 5%.

8. The rotary ball screw spline assembly according to claim 1, wherein the ball spline (Ds) further comprises a bearing jacket (33) arranged on an outer surface of the spline outer cylinder (31) in a sheathing manner, and the second balls (32) are arranged between the bearing jacket (33) and the spline outer cylinder (31), and a jacket outer diameter (Rs) of the bearing jacket (33) is calculated by the following formula: $Rs = 2 \left(\frac{hs}{2 cos \left(a+b\right)}+\frac{3 ∅}{2}\times Fs+2X\right)$ Rs is the jacket outer diameter.

9. The rotary ball screw spline assembly according to claim 1, wherein a spline inner diameter (ds) of the ball spline (30) is calculated by the following formula: $ds = 2 \left(\sqrt{{\left(\frac{hs}{2}-sin\left(\frac{∅ \times 180}{2 \times π}\right)\right)}^{2} + {\left(\frac{∅}{2}\times cos\left(\frac{∅ \times 180}{2 \times π}\right)\right)}^{2}}\right)$ ds is the spline inner diameter.

10. A rotary ball screw spline assembly (100), comprising:
a shaft (10), wherein a surface of the shaft (10) is provided with a spiral thread rolling groove (11) and a straight linear rolling groove (12);
a ball nut (20), arranged on the shaft (10) and having a plurality of first balls (21) rolling on the thread rolling groove (11), wherein a first distance (d1) is provided between a center of each first ball (21) located in the thread rolling groove (11) and an axis (C) of the shaft (10); and
a ball spline (30), arranged on the shaft (10), wherein the ball spline (30) comprises a spline outer cylinder (31) and a plurality of second balls (32), the second balls (32) are arranged on the spline outer cylinder (31) and roll on the linear rolling groove (12), a second distance (d2) is provided between a center of each second ball (32) located in the linear rolling groove (12) and the axis (C) of the shaft (10), the second distance (d2) is greater than the first distance (d2), and a spline inner diameter (ds) of the spline outer cylinder (31) is calculated by the following formula: $ds = 2 \left(\sqrt{{\left(\frac{hs}{2}-sin\left(\frac{∅ \times 180}{2 \times π}\right)\right)}^{2} + {\left(\frac{∅}{2}\times cos\left(\frac{∅ \times 180}{2 \times π}\right)\right)}^{2}}\right)$
ds is the spline inner diameter;
hs is twice a distance between the center of the second ball (32) and an axis of the spline outer cylinder (31) when the second ball (32) rolling on the linear rolling groove (12) is assembled on the spline outer cylinder (31); and
Ø is a diameter of the second ball (32);
wherein hs meets the following rules: $hs > D + 2 \times \left(cos\left(a+b\right)\times \frac{∅}{2}\right)$
D is a diameter of the shaft (10);
a is an included angle between a first extension line (L1) and a second extension line (L2), the first extension line (L1) is an imaginary straight line from a contact point between the second ball (32) and the linear rolling groove (12) to the center of the second ball (32), and the second extension line (L2) is an imaginary straight line with the shortest distance between the center of the second ball (32) and the axis (C); and
b is a machining error angle of the linear rolling groove (12).

11. The rotary ball screw spline assembly according to claim 10, wherein a is less than 45°.

12. The rotary ball screw spline assembly according to claim 10, wherein a diameter of the first ball (21) is the same as that of the second ball (32).

13. The rotary ball screw spline assembly according to claim 10, wherein an angle of b is about 10° to 15°.
